# EUROPEAN PATENT SPECIFICATION

(11) **EP 1 939 040 B1**
(45) Date of publication and mention of the grant of the patent: **16.11.2011**
(21) Application number: 07023782.1
(22) Date of filing: 07.12.2007
(51) Int. Cl.: B60R 1/00, G02B 27/01, G06T 3/00, H04N 7/18

(54) **Driving support method and driving support apparatus**
Fahrunterstützungsverfahren und Fahrunterstützungsvorrichtung
Procédé d'assistance à la conduite et appareil d'assistance à la conduite

(30) Priority: 20.12.2006 JP 2006343348
(43) Date of publication of application: 02.07.2008
(73) Proprietor: Aisin AW Co., Ltd., Fujii-cho Anjo-shi, Aichi 444-1192 (JP)
(72) Inventor: Kubota, Tomoki c/o Aisin AW CO., LTD., Aichi 444-8564 (JP); Okabe, Hidefumi c/o Aisin AW CO., LTD., Aichi 444-8564 (JP); Takagi, Minoru c/o Aisin AW CO., LTD., Aichi 444-8564 (JP)
(74) Representative: Kramer - Barske - Schmidtchen

(56) References cited:
- DE-A1-102004 038 822
- JP-A- 2004 064 131
- JP-A- 2006 044 596
- JP-A- 2006 290 304

## Description

### BACKGROUND

### Related Technical Fields

The present application relates to a driving support method and a driving support apparatus.

### Related Art

In-vehicle systems that film the areas which are dead-angles for the driver with an onboard camera and show them on a display or the like have been developed as devices to support safe driving. For example, one of such systems has been proposed wherein the onboard camera films the dead-angle area caused by the front pillar of the vehicle and the filmed images are displayed on the inner side of the front pillar. The front pillars are a pair of pillars, one on the left and one on the right, that support the windshield or the roof. They are located diagonally forward from the driver who is sitting on the driver's seat and block a part of the driver's field of vision. Nevertheless, the front pillars are members that must keep a predetermined thickness for the sake of safety.

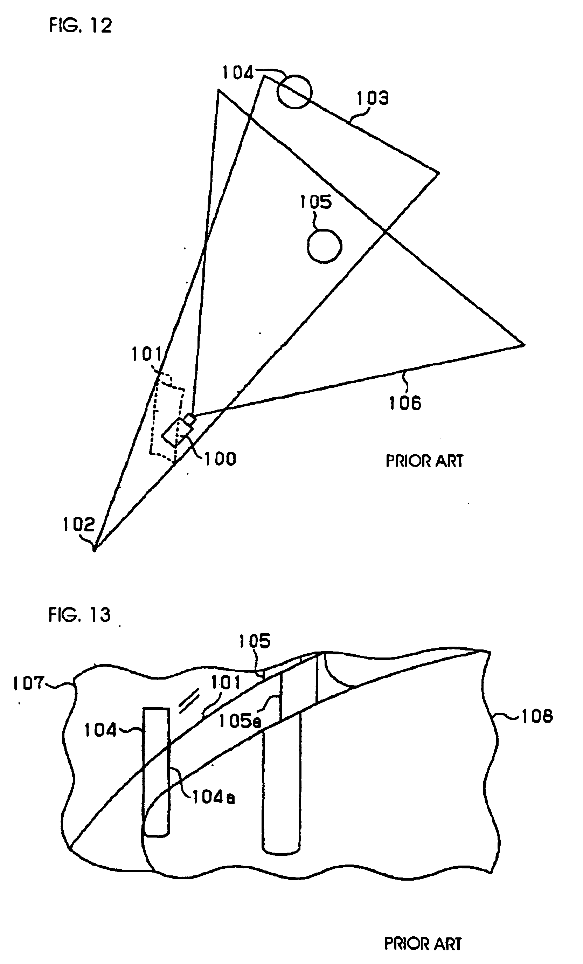

The above-described system, as shown in FIG. 12, includes a camera 100 installed in the vehicle body capable of filming an area to be filmed 106, an image processor that performs image processing on the picture signals outputted from the camera 100, a projector (not shown in the diagram) that projects the images onto the inner side of a front pillar 101, and so forth. With this system, the driver may visually recognize the outside scene as if the driver is seeing through the front pillar 101 from a driver's position 102. Thus, the driver can recognize the road shape or the obstacle on the front sideward of the vehicle at the intersection and so forth.

When projecting the picture signals filmed by the camera 100 on the pillar 101, the projected images on the pillar 101 unfortunately tend to tilt or be out of alignment against the scene that the driver is actually viewing through the window because the viewing angle of the camera 100 and the viewing angle of the driver are not matched. Accordingly, Japanese Unexamined Patent Application Publication No. 2005-184225 discloses a technology wherein a projective conversion is performed on the images being filmed by the camera onto a virtual plane (a surface of a virtual screen) that has been set for the purpose of adjusting to the driver's viewing angle.

DE 10 2004 038822 A1 relates to a pillar of a vehicle, which is associated to a sensor unit, wherein the sensor unit is adapted for detecting information of an area in front of the pillar, and which is associated to a display unit for displaying data received from the sensor unit, wherein the display unit is adapted such that a driver behind the pillar is able to obtain information of the area in front of the pillar.

The method/apparatus according to DE 10 2004 038822 A1 comprises the features of
setting an object on a road surface approached by the vehicle as a drawing reference object,
setting a virtual plane,
and performing a coordinate conversion by transferring image data input from the camera onto the virtual plane and
displaying an image corresponding to the dead-angle area on the interior side of the pillar using the image data for which the coordinate conversion has been performed.

JP 2006-044596 A relates to a display device for a vehicle with high dead angle reduction effect constituted such that a driver will easily, instantaneously and intuitively grasp which direction a projected image is directed.

JP 2006-290304 A relates to a method and a device for displaying the outside of a vehicle capable of projecting the ever-changing outside scene on a real-time basis by performing the established image processing on a inner surface of a pillar without providing any unnatural impression.

JP 2004-064131 A relates to a display for a vehicle which suppresses a cost increase and displays an area behind the driver's blind spot around the vehicle for its driver.

### SUMMARY

However, when a virtual plane 103 is defined at the position having a predetermined distance from the driver's position 102 as shown in FIG.12, indications on a road surface, traffic lights, obstacles, and so forth located at other than the above position having the predetermined distance tend not to be displayed properly when projected on the pillar as the projected images. That is to say, if a target object to be visually recognized 104 is located on the virtual plane 103 as shown in FIG.12, the target object to be visually recognized 104 will be projected on the pillar 101 as an image 104a without a distortion as shown in FIG. 13. Yet, a target object to be visually recognized 105 located at other than the virtual plane 103 will be displayed on the pillar 101 as an image 105a in the state of tilting or being out of alignment against the actual scene viewed through a window 107 and/or 108.

Thus, when obstacles that the driver is likely to pay close attention such as an indication on the road surface or a pedestrian are not located on the virtual plane 103, the obstacles may be projected on the pillar with a distortion, therefore, the driver may feel odd.

Accordingly, exemplary implementations of the broad principles described herein provide a driving support method and a driving support apparatus capable of clearly projecting the image of a specific target object on the pillar.

Various exemplary implementations provide a driving support method by using a filming unit installed in a vehicle for filming a dead-angle area caused by a pillar of the vehicle and for displaying an image filmed by the filming unit on the inner side of the pillar, comprising the steps of:
setting an object on a road surface around the vehicle as a drawing reference object;
setting a virtual plane at a position that passes through the drawing reference object;
performing a coordinate conversion on image data inputted from the filming unit onto the virtual plane; and
displaying an image corresponding to the dead-angle area caused by the pillar on the inner side of the pillar on the basis of the image data on which the coordinate conversion has been performed.

According to the above exemplary implementation, a virtual plane is set at a position that passes through a drawing reference object, and a coordinate conversion is performed on image data onto the virtual plane. Therefore, even when a vehicle travels, the drawing reference object can always be displayed on the inner surface of the pillar without a distortion.

Various exemplary implementations provide a driving support apparatus by using a filming unit installed in a vehicle for filming a dead-angle area caused by a pillar of the vehicle and for displaying an image filmed by the filming unit on the inner side of the pillar, comprising:
target object setting means for setting an object on a road surface around the vehicle as a drawing reference object;
virtual plane setting means for setting a virtual plane at a position that passes through the drawing reference object;
image processing means for performing a coordinate conversion on image data inputted from the filming unit onto the virtual plane; and
output control means for displaying an image corresponding to the dead-angle area caused by the pillar on the inner side of the pillar on the basis of the image data on which the coordinate conversion has been performed onto the virtual plane.

According to the above exemplary implementation, the driving support apparatus sets a virtual plane at a position that passes through a drawing reference object and performs a coordinate conversion on image data onto the virtual plane. Therefore, the driving support apparatus can always display the image of the drawing reference object on the inner surface of the pillar without a distortion even when a vehicle travels.

Various exemplary implementations provide a driving support apparatus according to claim 2, wherein the target object setting means, on the basis of map data that store a position of an indication on a road surface or an installed object on a road surface, sets the indication on a road surface or the installed object on a road surface as the drawing reference object.

According to the above exemplary implementation, an indication on the road surface or an installed object on the road surface is set as a drawing reference object, therefore, the image of the indication on the road surface or the installed object on the road surface can be displayed on the pillar without a distortion. In addition, the position of the drawing reference object can be obtained in advance on the basis of the map data, therefore, the coordinate conversion is performed at the right time with no delay and the drawing reference object can be displayed without a distortion when the vehicle has approached the drawing reference object.

Various exemplary implementations provide the driving support apparatus according to claim 2, further comprising obstacle detecting means for detecting an obstacle that exists on a road surface;
wherein the target object setting means sets the obstacle as the drawing reference object.

According to the above exemplary implementation, an obstacle that exists on the road surface is set as the drawing reference object, therefore, a pedestrian or the like to which the driver needs to pay close attention can be displayed without a distortion.

Various exemplary implementations provide the driving support apparatus according to claim 2, 3, or 4, wherein a filming plane of the filming unit is set at a position that intersects with the virtual plane.

According to the above exemplary implementation, a filming plane of a filming unit is set at the position that intersects with the virtual plane, therefore, the filming unit can film focusing on the object on the virtual plane, i.e., the drawing reference object. Thus, the drawing reference object can be displayed clearly on the inner surface of the pillar.

### BRIEF DESCRIPTION OF THE DRAWINGS

Exemplary implementations will now be described with reference to the accompanying drawings, wherein:

FIG.1 is a block diagram illustrating an exemplary driving support system according to the embodiment of the present invention;

FIG.2 is a diagram illustrating position detecting sensors for detecting a driver's head;

FIG.3 is a diagram illustrating a position to install a camera;

FIG.4 is a diagram illustrating a position to set a virtual plane;

FIG.5 is a diagram illustrating a virtual plane and a camera-filming plane;

FlG.6 is a diagram illustrating a mask pattern;

FIG.7 shows a side view of a vehicle illustrating a position of a projector;

FIG.8 shows an elevation view illustrating an inner surface of a pillar on which an image is projected;

FIG.9 is a diagram illustrating a projecting direction of a projector;

FIG.10 is a flowchart illustrating an exemplary procedure of the embodiment of the present invention;

FIG.11 is a diagram illustrating a variant camera-filming plane;

FIG.12 is a diagram illustrating a conventional position of a virtual plane;

FIG.13 is a diagram illustrating a conventional projected image on a pillar.

### DETAILED DESCRIPTION OF EXEMPLARY IMPLEMENTATIONS

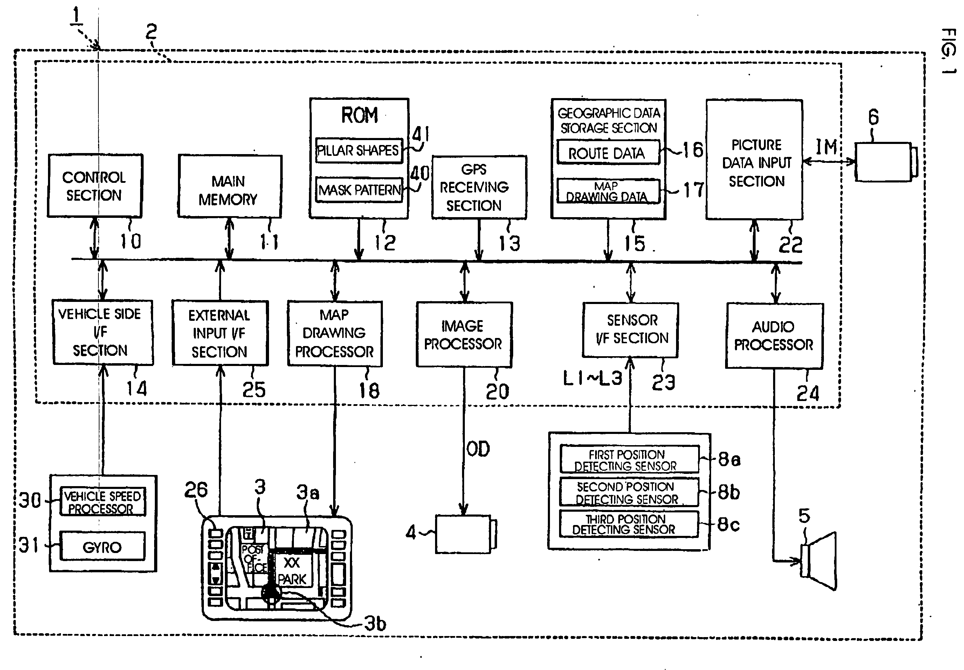

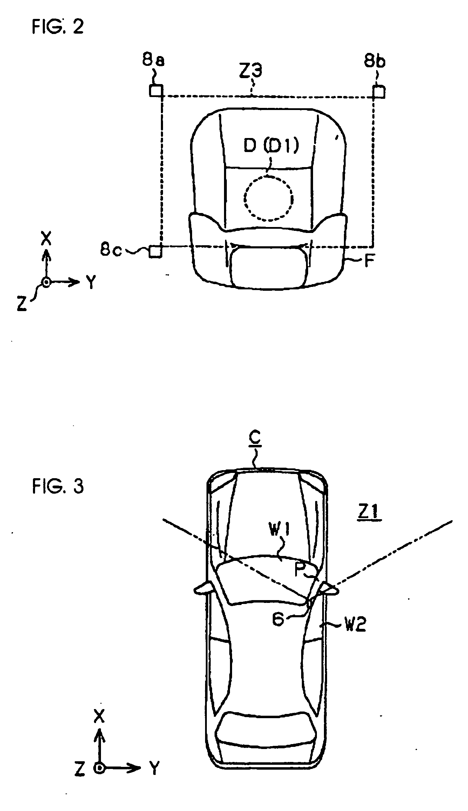

FIG. 1 is a block diagram illustrating an exemplary driving support system 1 mounted on a vehicle. The driving support system 1 is mounted on a vehicle C (see FIG.3) and includes a driving support unit 2 as driving support apparatus, a display 3, a projector 4 serving as a projective device, a speaker 5, a camera 6 serving as an imaging device, a first position detecting sensor 8a, a second position detecting sensor 8b, and a third position detecting sensor 8c as shown in FIG.1.

The driving support unit 2 includes a control section 10, a nonvolatile main memory 11, a ROM 12, and a GPS receiving section 13. The control section 10 may be CPU, MPU, ASIC, or the like and performs a mail control of each processing in accordance with a driving support program stored in the ROM 12. The main memory 11 temporarily stores a computation result of the control section 10.

The control section 10 obtains satellite orbit information and time information that the GPS receiving section 13 has received from a GPS satellite and calculates an absolute position of an own vehicle by means of radio navigation. The control section 10 also inputs a vehicle speed pulse and an angular velocity each from a vehicle speed sensor 30 and a gyro 31 being provided in the vehicle C via a vehicle side I/F section 14 in the driving support unit 2. Then the control section 10 calculates a relative position from a reference position by means of an autonomous navigation using the vehicle speed pulse and the angular velocity, combines with the absolute position which has been calculated by means of the radio navigation, and specifies a position of the own vehicle.

In addition, the driving support unit 2 includes a geographic data storage section 15. The geographic data storage section 15 may be an external storage medium such as a built-in hard disk, an optical disk, or the like. The geographic data storage section 15 stores each route network data (hereinafter, refer to route data 16) being as map data for searching for a route to a destination and stores each map drawing data 17 being as map data for outputting a map screen 3 a on the display 3.

The route data 16 are data pertaining to roads in each of the mesh into which has divided an entire nation. The route data 16 include data on an identifier of each of the mesh, node data on nodes indicating an end point of an intersection and a road, data on an identifier of each of links connecting each of the nodes, data on link cost, and so forth. By using the route data 16, the control section 10 may search for a suggested route to a destination and may determine whether or not the vehicle C is approaching a guidance point such as e.g., an intersection.

The map drawing data 17 are data for drawing a road shape, a background, and so forth, and is stored in each mesh that has divided a nation map. The map drawing data 17 store data pertaining to road indications such as a centerline, a white line which sections a roadside zone, a zebra zone, a pedestrian crossing, and so forth, and also store data pertaining to objects installed on road surface such as a traffic light and so forth. More specifically, a type of a road indication, a coordinate of the position of a road indication, a type of an installed object on road surface, a coordinate of the position of an installed object on road surface, and so forth, are stored being associated with an intersection or a curve of each of geographic points.

As shown in FIG.1, the driving support unit 2 includes a map drawing processor 18. The map drawing processor 18 reads out the map drawing data 17 for drawing a map around the position of an own vehicle from the geographic data storage section 15, generates data for map-outputting, and displays the map screen 3a based on the data for map-outputting on the display 3. The map drawing processor 18 also superposes an own vehicle position indicator 3b indicating the position of an own vehicle on the map screen 3a.

In addition, the driving support unit 2 includes an audio processor 24. The audio processor 24 has an audio file (not shown) and outputs voice for guiding a route to a destination from the speaker 5,for example. Further, the driving support unit 2 includes an external input I/F section 25. The external input I/F section 25 inputs a signal being inputted from an operation switch 26 lying around the display 3 or touch panel display 3 on the basis of a user's inputting operation and then outputs the inputted signal to the control section 10.

The driving support unit 2 further includes a sensor I/F section 23 constructing detecting means. The sensor I/F section 23 inputs a detecting signal from the first position detecting sensor 8a, the second position detecting sensor 8b, and the third position detecting sensor 8c. The first position detecting sensor 8a, the second position detecting sensor 8b, and the third position detecting sensor 8c are made up of an ultrasonic sensor and installed around a driver D sitting on a front seat F inside a vehicle as shown in FIG.2. The first position detecting sensor 8a is installed nearby a rearview mirror (not shown in the diagrams) nearly as high as or slightly higher than a head D1 of the driver D.

The second position detecting sensor 8b is installed around the upper end of a door window W2 (see FIG.3) diagonally forward right side of the driver D. The third position detecting sensor 8c is installed at the left side of the front seat F inside of a roof R. Ultrasonic wave being transmitted from a sensor head (not shown in the diagrams) of each of the position detecting sensors 8a, 8b, and 8c is reflected on the head D1 of the driver D. Each of the position detecting sensors 8a, 8b, and 8c gauges the time from when the ultrasonic wave is transmitted to when the reflected wave is received, and on the basis of the gauged time, each of the relative distances to the head D1 is calculated. The each calculated relative distance is outputted to the control section 10 via the sensor I/F section 23. Note that the sensor I/F section 23 could be made to calculate the relative distance to the head D1 on the basis of a signal from each of the position detecting sensors 8a, 8b, and 8c.

The control section 10, by means of a heretofore known method, obtains a center position of the head Dc by triangulation or the like on the basis of a head movement range wherein the head D1 of a standard-built driver D may possibly move in the state of sitting on a driver's seat and also on the basis of each of the relative distances that the first position detecting sensor 8a, the second position detecting sensor 8b, and the third position detecting sensor 8c has detected.

As shown in FIG.1, the driving support unit 2 includes a picture data input section 22 and an image processor 20 serving as target object setting means, virtual plane setting means, image processing means, and output control means which input image data IM from the picture data input section 22. The picture data input section 22 operates the camera 6 provided on the vehicle C and inputs the image data IM which have been filmed with the camera 6 based on the control performed by the control section 10.

The camera 6 images a color image and includes an optical mechanism, CCD image sensor (each not shown in the diagrams), an automatic-focus mechanism and so forth being made up of e.g., a lens and a mirror. As shown in FIG.3, the camera 6 is installed on the outside of a front pillar P (hereinafter simply refer to a pillar P) of the vehicle C with an optical axis faced forward the vehicle C. In the present embodiment, the camera 6 is installed on the pillar P on the right side of the driver's seat as the driver's seat is placed on the right side of the vehicle. The camera 6 images a scene of an area to be filmed Z1 which includes the front right side of the vehicle C and a part of the right side of the vehicle C.

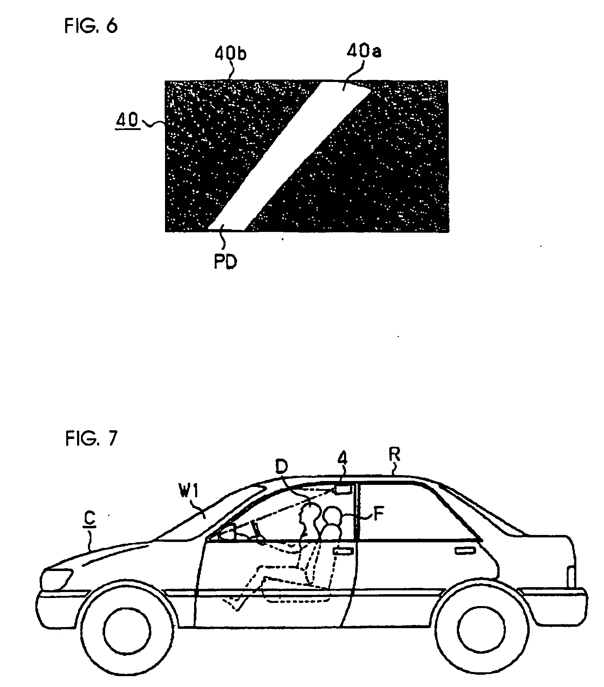

The image processor 20 in the driving support unit 2 obtains the image data IM from the camera 6 via the picture data input section 22. The image processor 20 also trims off the area blocked by the pillar P from the obtained image data IM and at the same time performs image processing to eliminate the distortion of the image. The data after the image processing will be outputted to the projector 4 (see FIG.7) provided inside of the vehicle and the projector 4 will project the image blocked by the pillar P on the inner side of the pillar P.

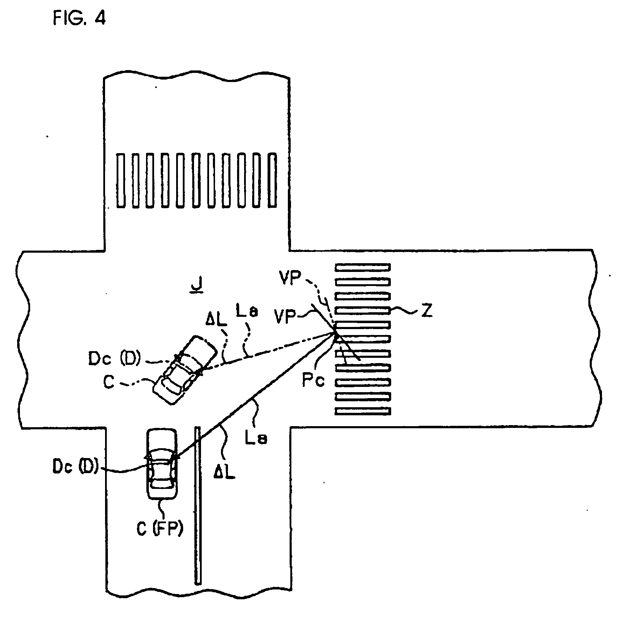

More specifically, when the control section 10 determines that the vehicle C has approached an intersection or a curve on the basis of the route data 16, the image processor 20 obtains a coordinate of an object to be visually recognized to which the driver is likely to pay close attention in the intersection or the curve. In the present embodiment, the image processor 20 obtains a coordinate of a pedestrian crossing Z as a drawing reference object on the basis of the map drawing data 17. For example, as shown in FIG.4, the image processor 20 obtains the coordinate of a reference point Pc of a pedestrian crossing Z being indicated at the front sideward area of the vehicle on the basis of the map drawing data 17. The reference point Pc may be stored in the map drawing data 17 in advance, or the image processor 20 may set the reference point Pc on the basis of the coordinate of the entire pedestrian crossing Z stored in the map drawing data 17.

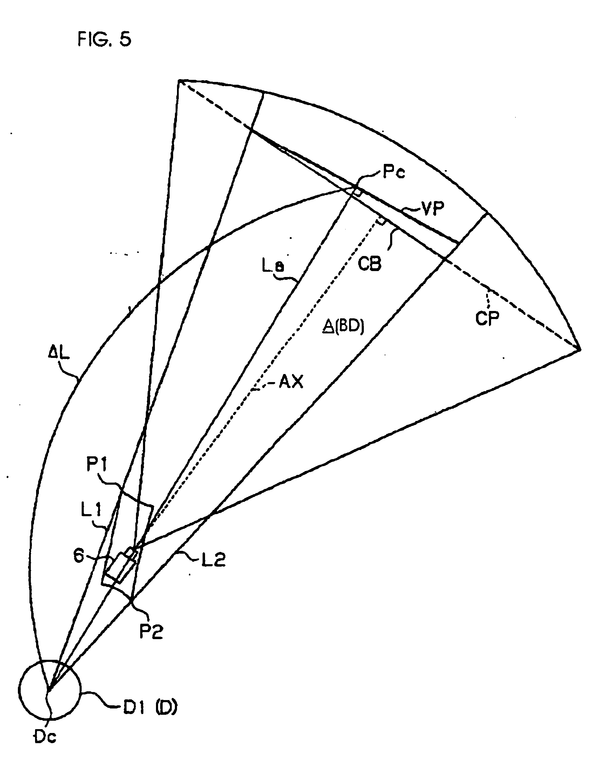

When the coordinate of the reference point Pc is obtained, the position of a virtual plane VP is determined based on the coordinate of the reference point Pc and the center position of the head Dc of the driver D which has been detected by the first position detecting sensor 8a, the second position detecting sensor 8b, and the third position detecting sensor 8c. The virtual plane VP is a plane for correcting the distortion of the pedestrian crossing Z wherein the reference point Pc was set. Further, the virtual plane VP is set in accordance with the viewing angle of the driver D with its origin at the viewing point of the driver D. When the image data IM being filmed with the camera 6 are carried out coordinate conversion onto the virtual plane VP, any objects on the virtual plane VP have characteristic features of being displayed without tilting or being out of alignment. As shown in FIG.5, the image processor 20 sets the virtual plane VP so as to include the reference point Pc and to locate vertically to a straight line La which connects the center position of the head Dc and the reference point Pc.

As shown in FIG.4, even when the vehicle C moves from an initial position FP wherefrom the virtual plane VP was set to the position shown with a two-dot chain line in the diagram and when a relative distance ΔL between the center position of the head Dc and the reference point Pc of the pedestrian crossing Z changes, the image processor 20 sets the virtual plane VP passing through the reference point Pc and vertical to the straight line La. That is to say, the virtual plane VP is always set at the position passing through the reference point Pc without moving together in accordance with the forward movement of the vehicle C. As shown in FIG.4, when the vehicle is making a turn, the inclination of the straight line La which connects the center position of the head Dc and the reference point Pc is changed. Therefore, according to the change, the virtual plane VP only changes its angle.

The image processor 20 also determines a camera-filming plane CP according to the position of the virtual plane VP. As shown in FIG.5, the camera-filming plane CP is vertical to an optical axis AX of the camera 6. The image processor 20 sets the camera-filming plane CP at the position intersecting with the virtual plane VP. In case a plurality of planes intersecting with the virtual plane VP are available to set, the plane intersecting in the vicinity of the reference point Pc may be selected.

Once the camera-filming plane CP is set, the image processor 20 films focusing the camera 6 on the camera-filming plane CP and obtains the image data IM via the picture data input section 22.

When the image data IM are obtained, a dead-angle segment being blocked by the pillar P is trimmed off from the image data IM. As shown in FIG.5, the image processor 20 calculates a tangent line L1 and L2 which passes through the center position of the head Dc of the driver D and each end point P1 and P2 of the pillar P, and the inside area of these tangent lines L1 and L2 is set as a dead-angle area A. In addition, after trimming off the area corresponding to the dead-angle area A from the image data IM, pillar dead-angle data BD are generated.

When the pillar dead-angle data BD are obtained, the image processor 20 performs a projection conversion on the pillar dead-angle data BD onto the virtual plane VP which passes through the reference point Pc. The projection conversion is processing of a coordinate conversion from each pixel of a dead-angle segment CB inside the dead-angle area A on the camera-filming plane CP to each pixel on the virtual plane VP, and a heretofore known coordinate conversion may be used.

Further, the image processor 20 converts the projection image which has been projected on the virtual plane VP in accordance with the three-dimensional shape of the pillar P on the basis of a pillar shape 41 (see FIG.1) stored in the ROM 12 and generates projection data PD.

In addition, for the projection data PD, the image processor 20 generates a picture signal to be outputted to the projector 4 on the basis of a mask pattern 40 (see FIG.1 and FIG.6) stored in the ROM 12. As shown in FIG.6, the mask pattern 40 is the data for masking the projection data PD and includes an image display area 40a corresponding to an inside shape of the pillar P and a mask 40b. The image processor 20 reads the projection data PD into the area of the image display area 40a and generates output data OD into the area of the mask 40b for the projector 4 not to display. When the output data OD are generated, the image processor 20 outputs the output data OD to the projector 4.

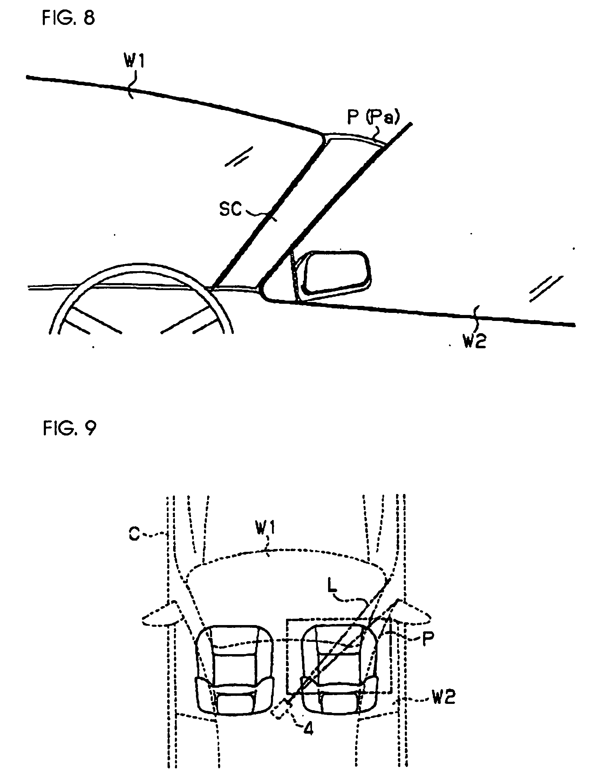

As shown in FIG.7, the projector 4 is installed inside of the roof R around the upper part in the vertical direction of the front seat F whereon the drive D is sitting so that the projector 4 is able to project an image to the inner surface of the pillar P located at the right side of the vehicle C. As shown in FIG.8, a screen SC which was cut off in accordance with the shape of the pillar P is applied on the inner surface Pa of the pillar P. The projector 4 is adjusted focusing on the screen SC. Note that, in case the inner surface Pa of the pillar P is made of a material and has a shape which can display a sharp image by receiving a projection light outputted from the projector 4, the screen SC may be omitted.

As shown in FIG.9, the projector 4 outputs a projection light L to the screen SC of the pillar P and projects an image on the screen SC. In addition, an image is made not to be projected on a windshield W1 or a door window W2 around the screen SC by means of the mask 40b.

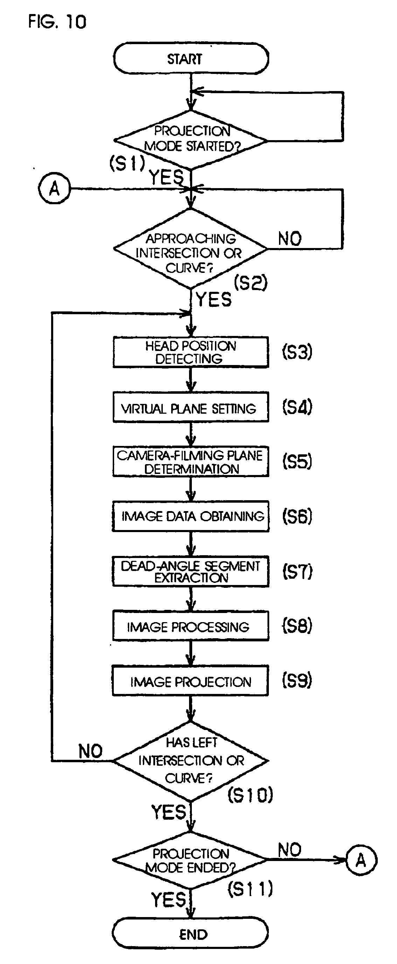

Next, a processing procedure of the present embodiment will be described with reference to FIG. 10. First, the control section 10 in the driving support unit 2 stands by a start of a projection mode for projecting an image of a scene on the inner surface of the pillar P (step S1). For example, when the touch panel or the operation switch 26 is operated and the control section 10 receives a request for a mode start via the external input I/F section 25, the control section 10 determines to start a projection mode. Alternatively, the control section 10 may determine to start the projection mode based on an ON signal from an ignition module (not shown in the diagrams).

When determined to start the projection mode (YES in step S1), the control section 10 stands by for the vehicle C to approach an intersection or a curve on the basis of the route data 16 (step S2). More specifically, when the control section 10 determines that the current position of the vehicle C has entered within a predetermined distance range (200 meters, for example) from an intersection including a T-shaped intersection or a curve which has equal to or more than a predetermined curvature, the control section 10 determines that the vehicle C has approached the intersection or the curve.

When determined that the vehicle C has approached the intersection or the curve (YES in step S2), the control section 10 detects the position of the driver D's head by means of each of the position detecting sensors 8a, 8b, and 8c (step S3). At such times, the control section 10 obtains each of the relative distances from each of the position detecting sensors 8a, 8b, and 8c to the head D1 via the sensor I/F section 23. Then, using the each of the relative distances, the center position of the head Dc is specified on the basis of the triangulation principle

When the center position of the head Dc is calculated, the image processor 20 sets the virtual plane VP as described above (step S4). When the vehicle C is approaching an intersection J (see FIG.4), the image processor 20 obtains the reference point Pc of the pedestrian crossing Z on the basis of the map drawing data 17 and sets the virtual plane VP at the position passing through the reference point Pc. In case the pedestrian crossing Z does not exist, the reference point Pc may be at an indication on a road surface such as a stop line and so forth in front of the vehicle. When the vehicle C is approaching a curve, the reference point Pc may be at the position with a great curvature on a center line indicated on a road.

Further, the image processor 20 sets the camera-filming plane CP (step S5). At that time, the camera-filming plane CP is set whereat the intersecting point of the camera-filming plane CP and the virtual plane VP overlaps with the reference point Pc or whereat the intersecting point passes in the vicinity of the reference point Pc. In case that the camera-filming plane CP and the virtual plane VP do not intersect on the reference point Pc or that the intersecting point is not in the vicinity of the reference point Pc, the camera-filming plane CP may be set so as to at least intersect with the virtual plane VP. Based on the camera-filming plane CP which the image processor 20 has set, the camera 6 films focusing on the camera-filming plane CP and obtains the image data IM (step S6).

Furthermore, the image processor 20 sets the dead-angle area A being blocked by the pillar P, extracts the area corresponding to the dead-angle area A from the image data IM (step S7), and generates the pillar dead-angle data BD as described above.

When the pillar dead-angle data BD are generated, the image processor 20 performs the image processing on the pillar dead-angle data BD (step S8). To be more precise, the image processor 20 performs the projection conversion on the pillar dead-angle data BD onto the virtual plane VP which has been set in step S4 as described above. Further, the image processor 20 converts the image on which the projection conversion has been performed onto the virtual plane VP in accordance with the pillar shapes stored in the ROM 12 and generates the projection data PD. In addition, based on the projection data PD and the mask pattern 40, the image processor 20 generates the output data OD wherein the area except for the pillar P was masked.

When the output data OD are generated, the image processor 20 outputs the output data OD to the projector 4. The projector 4 projects the image of the area blocked by the pillar P on the screen SC provided on the inner surface Pa of the pillar P as shown in FIG.9 (step S9). The projected image displayed on the screen SC has gone through the projection conversion onto the virtual plane VP in accordance with an indication on a road surface such as the pedestrian crossing Z and so forth in advance, therefore, such an indication on a road surface is displayed without tilting or being out of alignment comparing to the scene being visually recognized through the windshield W1 and the door window W2. Thus, at least the indication on a road surface to which the driver D is likely to pay close attention at the time of passing the intersection J or the curve is projected on the pillar P without distorting. Thereby, a driver may visually recognize an image blocked by the pillar P without feeling odd.

When the image processor 20 has projected an image on the pillar P, the control section 10 determines whether or not the vehicle C has left the intersection J or a curve (step S10). If the control section 10 determines that the vehicle C locates inside or in the vicinity of the intersection J or a curve (NO in step S10), the procedure returns to step S3 and the sequence from the head position detection (step S3) to the image projection (step S9) will be repeated. That is to say, the image blocked by the pillar P will be projected on the pillar P until the vehicle C leaves the intersection J or a curve.

Once the vehicle C is judged to have left the intersection J or a curve (YES in step S10), the control section 10 determines whether or not the projection mode to be terminated (step S11). The termination trigger may be a mode termination request by an operation with the touch panel or the operation switch 26 or an OFF signal of an ignition module. When these signals are inputted, the control section 10 determines to terminate the projection mode (YES in step S11) and the processing will terminate accordingly.

According to the foregoing embodiment, the following advantages may be gained.

With the foregoing embodiment, when the vehicle C has approached an intersection or a curve, the image processor 20 sets the virtual plane VP always at the position passing through the reference point Pc of a target object such as an indication on a road surface. In addition, the image processor 20 performs the projection conversion on the image data IM filmed by camera 6 on the virtual plane VP. Accordingly, even when the vehicle C moves, the target object to which a driver is likely to pay close attention may always be displayed on the inner surface Pa of the pillar P without a distortion so that a driver may not feel odd.

With the foregoing embodiment, a coordinate of a target object such as an indication on a road surface and so forth is obtained on the basis of the map drawing data 17 stored in the geographic data storage section, and the reference point Pc is set at the position of the target object. Thus, the reference point Pc may be set in advance by making use of the map drawing data 17 included in the driving support system 1, therefore, from the time when the vehicle C starts to enter the intersection J or a curve, an image may be displayed on the pillar P without a distortion.

With the foregoing embodiment, the image processor 20 sets the camera-filming plane CP at the position intersecting with the virtual plane VP. Thus, the camera may film focusing on a target object such as an indication on a road surface and so forth on the virtual plane VP, therefore, the indication on a road surface may be displayed with a high contrast.

Numerous variants of the foregoing embodiment may be produced in the ways described below.

In the foregoing embodiment, the reference point Pc of an indication on a road surface is set on the basis of the map drawing data 17. However, by performing a white line recognition processing on the image data IM obtained from the camera 6, a white line (or a yellow line) of an indication on a road surface may be detected. Then, the reference point Pc may be set at the edge or the center of the detected white line alternatively.

In the foregoing embodiment, the virtual plane VP is set in accordance with an indication on a road surface such as a pedestrian crossing Z and so forth. However, the target object whereon the position of the virtual plane VP is set may conveniently be changed. For example, the virtual plane VP may be set on an installed object on road surface such as a traffic light. Alternatively, the vehicle C may mount a radar or the like as obstacle detecting means to calculate a relative distance to an obstacle in front of a vehicle, and when an target obstacle such as a pedestrian or a bicycle and so forth is detected, the virtual plane VP may be set on the obstacle. Note that the judgment whether or not the obstacle is a pedestrian or a bicycle, for example, may be made by means of a heretofore known image processing such as a characteristic feature detection and so forth.

Data that indicate a position of an indication on a road surface such as a pedestrian crossing may be obtained e.g., through a road-to-vehicle communication, a vehicle-to-vehicle communication, or any server delivering suchlike data. In addition, data that indicate a position of an obstacle such as a pedestrian and so forth may also be received through an external apparatus such as other vehicle.

In the foregoing embodiment, the audio processor 24 may be omitted in case of not using audio guidance.

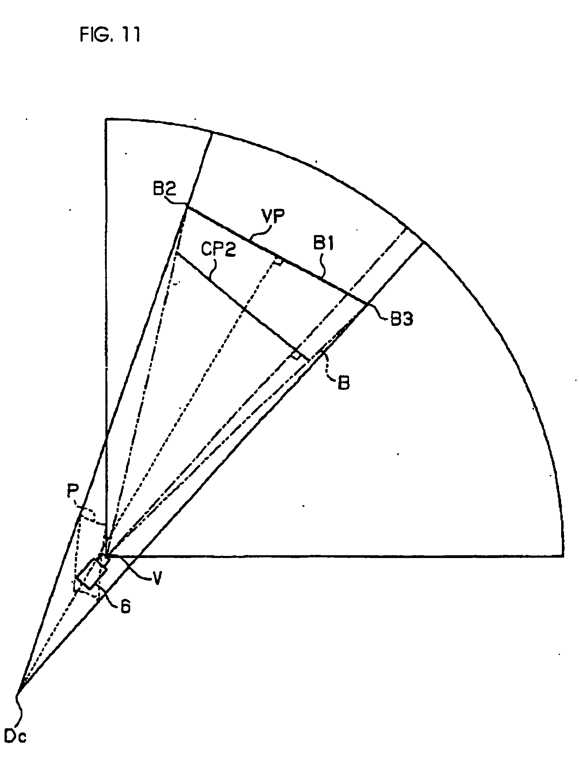

In the foregoing embodiment, the camera-filming plane CP is set so as to intersect with the virtual plane VP, however, the camera-filming plane CP may be set in front of the virtual plane VP as shown in FIG.11. For example, the camera-filming plane CP2 may be set in an area B which is surrounded by an end point B2, B3 of a dead-angle segment B1 blocked by the pillar P out of the virtual plane VP and a viewing point V of the camera 6, between the virtual plane VP and the camera 6. In such a case, the part corresponding to the area B being blocked by the pillar P is extracted from the image data IM. Then, the projection conversion is performed on the extracted data from the camera-filming plane CP2 onto the virtual plane VP. Thereby, an indication on a road surface or an object to be visually recognized such as a pedestrian which is located at the reference point Pc may be displayed on the pillar P without a distortion.

In the foregoing embodiment, the projector 4 projects an image on the inner surface Pa of the pillar P. However, a thin-model display may be provided on the inner side of the pillar P as display means, and the image processor 20 may output the output data OD to the display.

In the foregoing embodiment, the camera 6 is provided on the outside of the front pillar P and films an area being blocked by the front pillar P, however, the camera 6 may be provided on the other pillars such as the one at the rear or the side of the vehicle. For example, the camera 6 may be installed on the outside of the rear pillar at the rear of the vehicle and may film an area being blocked by the rear pillar. In such a case, the projector 4 is provided at the position capable of projecting an image onto the inner surface of the rear pillar, and the image processor 20 projects the image of the dead-angle area blocked by the rear pillar onto the inner surface of the rear pillar on the basis of the image data that the camera 6 has filmed. Thereby, when the vehicle C moves backward toward a parking frame, for example, by use of the projected image, a driver can recognize the parking frame being blocked by the rear pillar and perform a parking operation with ease accordingly. In addition, the camera 6 may be provided on the outside of a plurality of pillars one by one, and a plurality of the projector 4 may be provided according to the positions of the camera 6. Further, a plurality of the camera 6 may be provided on one pillar P.

In the foregoing embodiment, the projector 4 is provided inside of the roof R of the vehicle C, however, the position of the projector 4 may be at anywhere as far as an image can be projected on the inner surface of the pillar P. For example, the projector 4 may be provided on the upper side of (the approximate center of) a dashboard and so forth.

## Claims

1. A driving support method by using a filming unit (6) installed at a vehicle (C) for filming a dead-angle area (A) caused by a pillar (P) of the vehicle (C) and for displaying an image filmed by the filming unit (6) on the inner side of the pillar (P), comprising the steps of:
setting an object (104) on a road surface around the vehicle (C) as a drawing reference object (Z) and obtaining a reference point (Pc) of the drawing reference object (Z);
setting a virtual plane (VP) such that it passes through the reference point (Pc) and such that it locates vertically to a straight line (La) which connects a center position of a head (Dc) of a driver of the vehicle (C) and the reference point (Pc);
performing a coordinate conversion on image data inputted from the filming unit (6) onto the virtual plane (VP); and
displaying an image corresponding to the dead-angle area (A) caused by the pillar on the inner side (SC) of the pillar (P) on the basis of the image data for which the coordinate conversion has been performed.

2. A driving support apparatus by using a filming unit (6) installed at a vehicle (C) for filming a dead-angle area (A) caused by a pillar (P) of the vehicle (C) and for displaying an image filmed by the filming unit (6) on the inner side (SC) of the pillar (P) comprising;
target object setting means (20) for setting an object (104) on a road surface around the vehicle (C) as a drawing reference object (Z) and for obtaining a reference point (Pc) of the drawing reference object (Z) ;
virtual plane setting means (20) for setting a virtual plane (103) such that it passes through the reference point (Pc) and such that it locates vertically to a straight line (La) which connects a center position of a head (Dc) of a driver of the vehicle (C) and the reference point (Pc);
image processing means (20) for performing a coordinate conversion for the image data inputted from the filming unit (6) onto the virtual plane (VP); and
output control means (20) for displaying an image corresponding to the dead-angle area (A) caused by the pillar (P) on the inner side (SC) of the pillar (P) on the basis of the image data for which the coordinate conversion has been performed onto the virtual plane (103).

3. The driving support apparatus according to claim 2, wherein the target object setting means (20), on the basis of map data that store a position of an indication on a road surface or an installed object (104) on a road surface, sets the indication on the road surface or the installed object on the road surface as the drawing reference object (Z).

4. The driving support apparatus according to claim 2, further comprising obstacle detecting means for detecting an obstacle that exists on a road surface;
wherein the target object setting means (20) sets the obstacle as the drawing reference object (Z).

5. The driving support apparatus according to claim 2, 3, or 4, wherein a filming plane (CP) of the filming unit (6) is set such that it intersects with the virtual plane (VP).

## Patentansprüche

1. Fahrunterstützungsverfahren, bei dem eine Filmeinheit (6) verwendet wird, die an einem Fahrzeug (C) installiert ist, zum Filmen eines Toter-Winkel-Bereichs (A), der durch eine Säule (P) des Fahrzeugs (C) verursacht wird, und zum Anzeigen eines Bildes, das durch die Filmeinheit (6) aufgenommen wird, auf der Innenseite der Säule (P), enthaltend die Schritte:
Setzen eines Objekts (104) auf einer Straßenoberfläche um das Fahrzeug (C) herum als ein Zeichnungsreferenzobjekt (Z) und Erlangen eines Referenzpunkts (Pc) des Zeichnungsreferenzobjekts (Z);
Setzen einer virtuellen Ebene (VP) derart, dass sie durch den Referenzpunkt (Pc) verläuft, und derart, dass sie sich vertikal zu einer geraden Linie (La) befindet, die eine Zentrumsposition eines Kopfes (Dc) eines Fahrers des Fahrzeugs (Z) und den Referenzpunkt (Pc) verbindet;
Durchführen einer Koordinatenumwandlung für Bilddaten, die von der Filmeinheit (6) eingegeben werden, auf die virtuelle Ebene (VP); und
Anzeigen eines Bildes, das dem Toter-Winkel-Bereich (A) entspricht, der durch die Säule verursacht wird, auf der Innenseite (SC) der Säule (P) basierend auf den Bilddaten, für die die Koordinatentransformation durchgeführt worden ist.

2. Fahrunterstützungsvorrichtung, bei der eine Filmeinheit (6) verwendet wird, die an einem Fahrzeug (C) installiert ist, zum Filmen eines Toter-Winkel-Bereichs (A), der durch eine Säule (P) des Fahrzeugs (C) verursacht wird, und zum Anzeigen eines Bildes, das von der Filmeinheit (6) aufgenommen worden ist, auf der Innenseite (SC) der Säule (P), enthaltend:
ein Zielobjekteinstellungsmittel (20) zum Setzen eines Objekts (104) auf einer Straßenoberfläche um das Fahrzeug (C) herum, als ein Zeichnungsreferenzobjekt (Z), und zum Erlangen eines Referenzpunkts (Pc) des Zeichnungsreferenzobjekts (Z);
ein Einstellungsmittel (20) für eine virtuelle Ebene zum Setzen einer virtuellen Ebene (103) derart, dass sie durch den Referenzpunkt (Pc) verläuft, und derart, dass sie sich vertikal zu einer geraden Linie (La) befindet, die eine Zentrumsposition eines Kopfes (Dc) eines Fahrers des Fahrzeugs (Z) und den Referenzpunkt (Pc) verbindet;
ein Bildverarbeitungsmittel (20) zum Durchführen einer Koordinatenumwandlung für die von der Filmeinheit (6) eingegebenen Bilddaten auf die virtuelle Ebene (VP); und
ein Ausgabesteuerungsmittel (20) zum Anzeigen eines Bildes, das dem Toter-Winkel-Bereich (A) entspricht, der durch die Säule (P) erzeugt wird, auf der Innenseite (SC) der Säule (P) basierend auf den Bilddaten, für die die Koordinatenumwandlung auf die virtuelle Ebene (103) durchgeführt worden ist.

3. Fahrunterstützungsvorrichtung nach Anspruch 2, bei der das Zielobjekteinstellungsmittel (20), basierend auf Kartendaten, die eine Position eines Hinweises auf einer Straßenoberfläche oder eines auf einer Straßenoberfläche installierten Objekts (104) speichern, den Hionweis auf der Straßenoberfläche oder das auf der Straßenoberfläche installierte Objekt als das Zeichnungsreferenzobjekt (Z) setzt.

4. Fahrunterstützungsvorrichtung nach Anspruch 2, ferner mit einem Hindernisdetektionsmittel zum Detektieren eines Hindernisses, das auf einer Straßenoberfläche existiert;
wobei das Zielobjekteinstellungsmittel (20) das Hindernis als das Zeichnungsreferenzobjekt (Z) setzt.

5. Fahrunterstützungsvorrichtung nach Anspruch 2, 3, oder 4, bei der eine Filmebene (CP) der Filmeinheit (6) derart gesetzt ist, dass sie die virtuelle Ebene (VP) kreuzt.

## Revendications

1. Procédé d'assistance à la conduite en utilisant une unité de filmage (6) installée dans un véhicule (C) pour filmer une zone d'angle mort (A) créée par un montant (P) du véhicule (C) et pour afficher une image filmée par l'unité de filmage (6) du côté interne du montant (P), comprenant les étapes consistant à :
régler un objet (104) sur une surface de route autour du véhicule (C) comme objet de référence de traçage (Z) et obtenir un point de référence (Pc) de l'objet de référence de traçage (Z) ;
régler un plan virtuel (VP) de sorte qu'il passe à travers le point de référence (Pc) et qu'il se situe à la verticale d'une ligne droite (La) qui raccorde une position centrale d'une tête (Dc) d'un conducteur du véhicule (C) et le point de référence (Pc) ;
effectuer une conversion de coordonnées sur des données d'image saisies d'une unité de filmage (6) sur le plan virtuel (VP) ; et
afficher une image correspondant à la zone d'angle mort (A) créée par le montant sur le côté interne (SC) du montant (P) en se basant sur les données d'image pour lesquelles la conversion de coordonnées a été effectuée.

2. Appareil d'assistance à la conduite en utilisant une unité de filmage (6) installée sur un véhicule (C) pour filmer une zone d'angle mort (A) créée par un montant (P) du véhicule (C) et pour afficher une image filmée par l'unité de filmage (6) du côté interne (SC) du montant (P), comprenant :
des moyens de réglage d'objet cible (20) pour régler un objet (104) sur une surface de route autour du véhicule (C) comme objet de référence de traçage (Z) et pour obtenir un point de référence (Pc) de l'objet de référence de traçage (Z) ;
des moyens de réglage de plan virtuel (20) pour régler un plan virtuel (103) afin qu'il passe à travers le point de référence (Pc) et qu'il se situe à la verticale d'une ligne droite (La) qui raccorde une position centrale d'une tête (Dc) d'un conducteur du véhicule (C) et le point de référence (Pc) ;
des moyens de traitement d'image (20) pour effectuer une conversion de coordonnées pour les données d'image saisies de l'unité de filmage (6) sur le plan virtuel (VP) ; et
des moyens de commande de sortie (20) pour afficher une image correspondant à la zone d'angle mort (A) créée par le montant (P) du côté interne (SC) du montant (P) en se basant sur les données d'image pour lesquelles la conversion de coordonnées a été effectuée sur le plan virtuel (103).

3. Appareil d'assistance à la conduite selon la revendication 2, dans lequel les moyens de réglage d'objet cible (20), en se basant sur des données de cartographie qui stockent une position d'une indication sur une surface de route ou un objet installé (104) sur une surface de route, règlent l'indication sur la surface de route ou l'objet installé sur la surface de route comme objet de référence de traçage (Z).

4. Appareil d'assistance à la conduite selon la revendication 2, comprenant en outre des moyens de détection d'obstacles pour détecter un obstacle qui existe sur une surface de route ;
dans lequel les moyens de réglage d'objet cible (20) établissent l'obstacle comme objet de référence de traçage (Z).

5. Appareil d'assistance à la conduite selon la revendication 2, 3 ou 4, dans lequel le plan de filmage (CP) de l'unité de filmage (6) est réglé de sorte qu'il coupe le plan virtuel (VP).
